# EUROPÄISCHE PATENTANMELDUNG

(11) **EP 0 568 840 A1**
(43) Veröffentlichungstag der Anmeldung: **10.11.1993**
(21) Anmeldenummer: 93106006.5
(22) Anmeldetag: 13.04.1993
(51) Int. Cl.: G01N 3/04, B29C 65/82, B29L 23/22

(54) **Vorrichtung zum Prüfen von Schweissverbindungen aus thermoplastischen Kunststoffen im Zug- und/oder Biegeversuch**

(30) Priorität: 06.05.1992 DE 4214420
(71) Anmelder: Dommer, Armin, D-71254 Ditzingen (DE); Dommer, Dieter, D-71254 Ditzingen (DE)
(72) Erfinder: Dommer, Armin, D-71254 Ditzingen (DE); Dommer, Dieter, D-71254 Ditzingen (DE)
(74) Vertreter: Jeck, Anton, Dipl.-Ing.

(57) **Zusammenfassung**

Die Erfindung betrifft eine Vorrichtung zum Prüfen von Schweißverbindungen aus thermoplastischen Kunststoff im Zug- und Biegeversuch mit einer Aufnahme zum Festlegen des Prüflings. Eine leicht handhabbare und vor Ort einsetzbare Vorrichtung wird dadurch geschaffen, daß sie zwei Zylinder-Kolben-Einheiten aus Zylinder (13/14) und Kolbenstange (10.1/10.2) aufweist, daß die beiden Zylinder (13/14) mittels eines feststehenden Aufnahmejoches (12) miteinander verbunden sind, daß die freien Enden der Kolbenstangen ein verstellbares Aufnahmejoch (15) tragen, daß beim Zugversuch in die beiden Aufnahmejoche (12/16) Spannvorrichtungen zum axialen Festlegen eines Prüflinges aus stumpfverschweißten Kunststoff-Rohrabschnitten oder eines Streifens davon eingesetzt oder einsetzbar sind und daß beim Biegeversuch in das eine Aufnahmejoch ein bügelartiges Widerlager (40) einsetzbar ist, das den Prüfling zu beiden Seiten der Schweißverbindung abstützt, während in das andere Aufnahmejoch ein auf die Schweißverbindung gerichteter Biegedorn (30) einsetzbar ist.

## Beschreibung

Die Erfindung betrifft eine Vorrichtung zum Prüfen von Schweißverbindungen aus thermoplastischen Kunststoff im Zug- und Biegeversuch mit einer Aufnahme zum Festlegen des Prüflings.

Für die Prüfung von Schweißverbindungen aus thermoplastischen Kunststoffen im Zug- und Biegeversuch gibt es die Richtlinien DVS 2203 Teil 3 und 5 des Deutschen Verbandes für Schweißtechnik e.V., in denen die Abmessungen für die Versuchsanordnung und die Durchführung der Versuche aufgezeigt sind. In der Regel werden die Zug- und Biegeversuche im Labor durchgeführt, wobei beim Zugversuch z.B. stumpfverschweißte Kunststoff-Rohrabschnitte und im Biegeversuch Streifen von miteinander verschweißten Kunststoff-Rohrabschnitten zu prüfen sind.

Es ist Aufgabe der Erfindung, eine Vorrichtung der eingangs erwähnten Art zu schaffen, die einfach im Aufbau ist und als handliches mobiles Gerät vor Ort verwendet werden kann.

Diese Aufgabe wird nach der Erfindung dadurch gelöst, daß sie zwei Zylinder-Kolben-Einheiten aus Zylinder und Kolbenstange aufweist, daß die beiden Zylinder mittels eines feststehenden Aufnahmejoches miteinander verbunden sind, daß die freien Enden der Kolbenstangen ein verstellbares Aufnahmejoch tragen, daß beim Zugversuch in die beiden Aufnahmejoche Spannvorrichtungen zum axialen Festlegen eines Prüflinges aus stumpfverschweißten Kunststoff-Rohrabschnitten oder eines Streifens davon eingesetzt oder einsetzbar sind und daß beim Biegeversuch in das eine Aufnahmejoch ein bügelartiges Widerlager einsetzbar ist, das den Prüfling zu beiden Seiten der Schweißverbindung abstützt, während in das andere Aufnahmejoch ein auf die Schweißverbindung gerichteter Biegedorn einsetzbar ist.

Die beiden Zylinder-Kolben-Einheiten bilden eine einfache Verstelleinrichtung, mit der das mit den Kolbenstangen verbundene Aufnahmejoch beim Zugversuch von dem feststehenden, mit den Zylindern verbundenen Aufnahmejoch wegbewegt oder beim Biegeversuch aufeinander zubewegt wird. Die Aufnahmejoche nehmen Spanneinrichtungen auf, mit denen ein Prüfling aus stumpfverschweißten Kunststoff-Rohrabschnitten oder ein Streifen daraus festgelegt werden kann.

Für den Biegeversuch ist das bügelartige Widerlager und der Biegedorn vorgesehen. Beide können mit den Aufnahmejochen verbunden werden, so daß die Vorrichtung je nach Einsatz der Spannvorrichtungen oder des Biegedorns und des Widerlagers wahlweise zur Durchführung des Zug- oder Biegeversuches verwendet werden kann.

Ist nach einer Ausgestaltung vorgesehen, daß in die beiden Aufnahmejoche Spannhalbschalen eingesetzt sind, deren Aufnahmen auf den maximalen Außendurchmesser des Prüflings aus stumpfverschweißten Kunststoff-Rohrabschnitten ausgelegt sind, daß zu beiden Seiten der Aufnahme Gewindebolzen angebracht sind, und daß auf die Gewindebolzen eine Spannplatte aufsetzbar und aufschraubbar ist, die eine auf denselben Durchmesser abgestimmte Spannhalbschale trägt, dann läßt sich der Prüfling aus stumpfverschweißten Kunststoff-Rohrabschniten mit dem größten Außendurchmesser verspannen. Damit ist der Einsatzbereich der Vorrichtung begrenzt.

Prüflinge mit abweichenden Außendurchmessern lassen sich nach einer weiteren Ausgestaltung damit in der Vorrichtung festlegen und spannen, daß in die Spannhalbschalen der Aufnahmejoch und der Spannplatten Reduzierhalbschalen einsetzbar sind, die auf kleinere Durchmesser des Prüflings aus stumpfverschweißten Kunststoff-Rohrabschnitten ausgelegt sind.

Denselben Zweck erreicht eine weitere Ausgestaltung dadurch, daß in die Aufnahmejoche Spannhalbschalen mit unterschiedlich großen, auf verschiedene Durchmesser der Prüflinge aus stumpfverschweißten Kunststoff-Rohrabschnitten abgestimmten Aufnahmen einsetzbar sind.

Der Halt der Prüflinge in den Spannhalbschalen und Reduzierhalbschalen wird dadurch verbessert, daß die Aufnahmen für die Prüflinge der Spannhalbschalen und der Reduzierhalbschalen aufgerauht, z.B. geriffelt sind.

Werden aus Prüflingen im Bereich der Schweißverbindung über den Umfang der Kunststoff-Rohrabschnitte verteilt längsgerichtete Streifen ausgeschnitten, dann können mit der Vorrichtung auch die Schweißverbindungen von Prüflingen mit weit größerem Außendurchmesser geprüft werden. Dazu ist dann vorzusehen, daß die Aufnahme der Spannhalbschalen mit Innennuten versehen sind, in die Spannscheiben mit konvexer bzw. konkaver Spannfläche zum Festlegen von streifenförmigen Prüflingen einsetzbar sind, wobei die konvexe und die konkave Spannfläche an die Krümmung der Innen- und Außenwandung des Prüflings angepaßt sind.

Für den Biegeversuch ist nach einer Weiterbildung vorgesehen, daß das bügelartige Widerlager und der Biegedorn stirnseitig an Befestigungszylindern befestigt sind, die einen umlaufenden Steg aufweisen und in die mit Innennut versehenen Aufnahmen der Spannhalbschalen axial unverschiebbar einsetzbar sind. Damit lassen sich über die Zylinder-Kolben-Einheiten und die Aufnahmejoche auch große Biegekräfte auf den Prüfling übertragen. Der Biegedorn und das bügelartige Widerlager sind entsprechend der eingangs erwähnten Richtlinie dimensioniert und laufen in Abstützkugelelementen aus.

Die Zylinder-Kolben-Einheiten sind vorzugsweise hydraulisch oder pneumatisch betätigbar.

Eine kompakte tragbare Vorrichtung wird nach einer Ausgestaltung dadurch geschaffen, daß die Zylinder der Zylinder-Kolben-Einheiten mit einer Basisplatte verbunden und von dieser getragen sind.

Die Erfindung wird anhand eines in den Zeichnungen dargestellten Ausführungsbeispiels näher erläutert. Es zeigt:
- Fig. 1: eine Vorrichtung nach der Erfindung in Draufsicht und
- Fig. 2: die für die Vorrichtung nach Fig. 1 ausgelegte Spannplatte, sowie einen Biegedorn und ein bügelartiges Widerlager als Zusatzteil für die Vorrichtung.

Auf einer Basisplatte 11 sind zwei Zylinder-Kolben-Einheiten im Abstand parallel zueinander angeordnet, wobei die Zylinder 13 und 14 fest mit der Basisplatte 11 und einem feststehenden Aufnahmejoch 12 verbunden sind. Die Kolbenstangen 10.1 und 10.2 der beiden Zylinder-Kolben-Einheiten tragen auf ihren freien Enden ein verstellbares Aufnahmejoch 15. Die Zylinder-Kolben-Einheiten können in an sich bekannter Weise hydraulisch oder pneumatisch betätigt werden, wobei das Aufnahmejoch 15 der Kolbenstangen 10.1 und 10.2 wahlweise in Richtung zum Aufnahmejoch 12 hin oder vom Aufnahmejoch 12 weg verstellt werden kann.

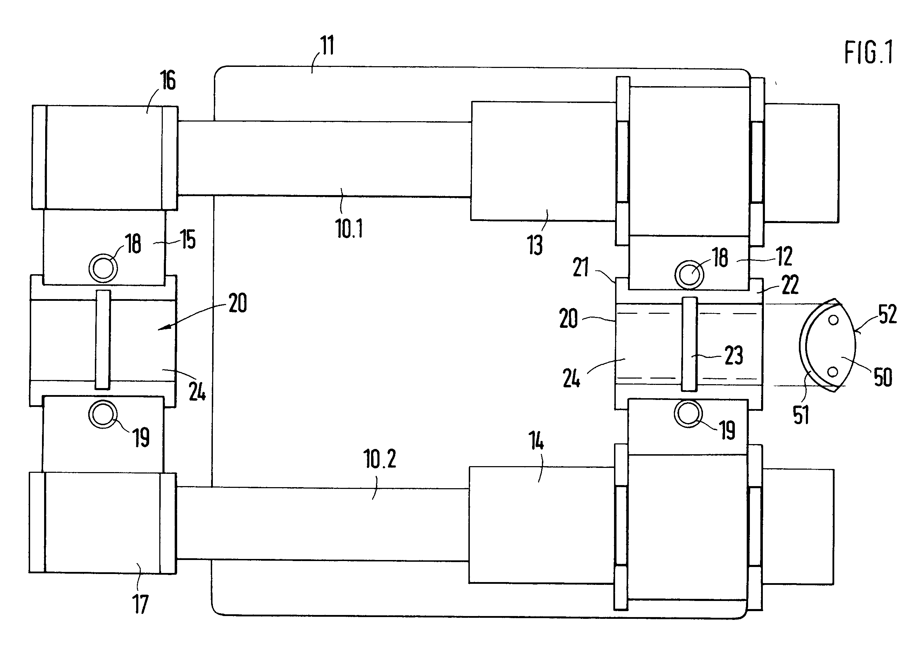

Bei dem Ausführungsbeispiel werden in die Aufnahmejoche 12 und 15 Spannhalbschalen 20 eingesetzt, die mit den Außenbünden 21 und 22 das Aufnahmejoch 12 bzw. 15 umgreifen und axial unverschiebbar an dem Aufnahmejoch 12 bzw. 15 festlegen. Zu beiden Seiten der Spannhalbschalen 20 trägt das Aufnahmejoch 12 bzw. 15 zwei Gewindebolzen 18 und 19, wie Fig. 1 zeigt. Die Aufnahme 24 der Spannhalbschalen 20 ist auf einen maximalen Außendurchmesser eines Prüflings aus stumpfverschweißten Kunststoff-Rohrabschnitten ausgelegt. In die Aufnahmejoche 12 und 15 können auch Spannhalbschalen mit Aufnahmen kleineren Durchmessers eingesetzt werden. Die Spannhalbschalen 20 können auch fest mit den Aufnahmejochen 12 und 15 verbunden sein. Zur Anpassung an kleinere Durchmesser des Prüflings werden dann Reduzierhalbschalen in die Spannhalbschalen 20 eingesetzt. Die Spannhalbschalen 20 können in den Aufnahmen 24 eine umlaufende Innennut 23 tragen, in die Stege der Reduzierhalbschalen eingreifen und diese axial unverschiebbar festlegen.

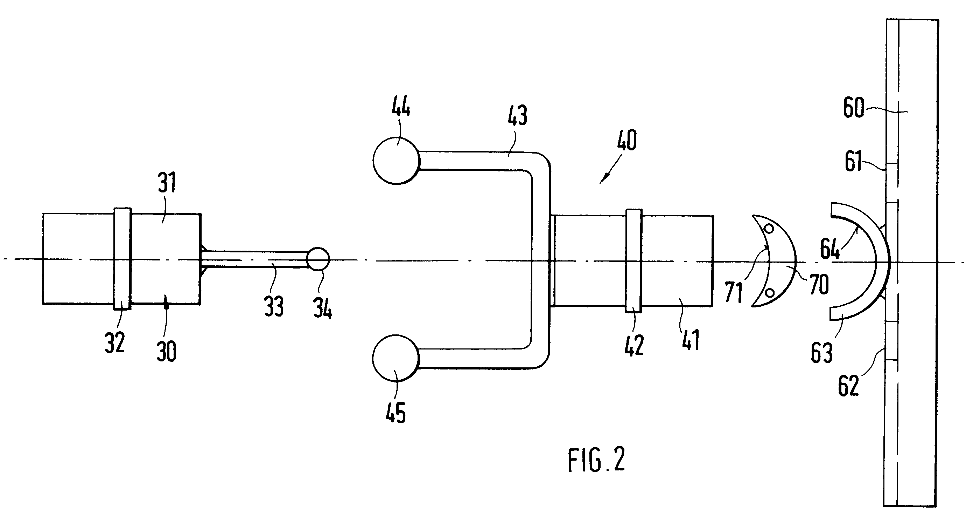

Die Spannvorrichtungen für die Prüflinge werden durch Spannplatten 60 vervollständigt, wie sie in Fig. 2 gezeigt sind. Die Spannplatte 60 hat zwei Bohrungen 61 und 62, die auf den Abstand der Gewindebolzen 18 und 19 der Aufnahmejoche 12 und 15 abgestimnmt sind. An der Spannplatte 60 ist eine weitere Spannhalbschale 63 angebracht. Wird die Spannplatte 60 auf die Gewindebolzen 18 und 19 aufgeschoben und festgeschraubt, dann kann ein Prüfling aus stumpfverschweißten Kunststoff-Rohrabschnitten festgespannt werden, wobei die Schweißverbindung zwischen die beiden Aufnahmejoche 12 und 15 gelegt wird. Die Aufnahmen 24 und 64 der Spannhalbschalen 20 und 60 sind aufgerauht, z.B. geriffelt, so daß ein guter Halt des Prüflings in der Spannvorrichtung erreicht wird.

Soll die Schweißverbindung eines Prüflings aus stumpfverschweißten Kunststoff-Rohrabschnitten mit weit größerem Außendurchmesser geprüft werden, dann werden über den Umfang der Schweißverbindung Streifen in Längsrichtung ausgeschnitten. Diese Streifen werden durch Spannscheiben 50 und 70 gehalten, die mit einem Steg 51 oder direkt in die Innennut 23 der Spannhalbschale 20 oder 63 eingesetzt werden. Dabei hat die eine Spannscheibe 50 eine konvexe Spannfläche 52, die an die Krümmung der Innenwandung des Streifens angepaßt ist, während die Spannscheibe 70 eine konkave Spannfläche 71 aufweist, die an die Krümmung der Außenwandung des Streifens angepaßt ist.

Soll an einem Streifen ein Biegeversuch ausgeführt werden, dann wird z.B. in das Aufnahmejoch 12, d.h. in die Spannhalbschale 20 , ein bügelartiges Widerlager 40 eingesetzt, das mit einem Befestigungszylinder 41 und einem Steg 42 axial unverschiebbar zwischen den Spannhalbschalen 20 und 63 gehalten ist, sobald die Spannplatte 60 angebracht ist. Das Widerlager 40 hat stirnseitig am Befestigungszylinder 41 eine Abstützgabel 43, die in Abstützkugelelementen 44 und 45 endet. Die Abstützgabel 43 ist gemäß der eingangs erwähnten Richtlinie zu dimensionieren. In das Aufnahmejoch 15, d.h. in die dort eingesetzte Spannhalbschale 20, wird ein Biegedorn 30 eingesetzt, der ebenfalls einen Befestigungszylinder 31 mit Steg 32 aufweist, um axial unverschiebbar gehalten zu werden. An der Stirnseite des Befestigungszylinders 31 ist ein Abstützfinger 33 angebracht, der in einem Abstützkugelelement 34 endet, welches zwischen die bei den Abstützkugelelemente 44 und 45 des Widerlagers 40 und damit auf die Schweißverbindung des zwischen dem Biegedorn 30 und dem Widerlager 40 gehaltenen Streifen als Prüfling ausgerichtet ist.

Je nach Prüfling sind gemäß der Richtlinie Widerlager 40 mit unterschiedlichen Stützabständen zwischen den Abstützkugelelementen zu wählen. Alle diese Widerlager haben denselben in die Aufnahme 24 einer Spannhalbschale 20 einsetzbaren Befestigungszylinder.

Wird den Kolben-Zylinder-Einheiten eine Meßeinrichtung zugeordnet, mit der der wirksame Druck erfaßt wird, dann kann während des Biege- und/oder Druckvorganges eine Anzeige und/oder eine Aufzeichnung vorgenommen werden. Dazu wird der erfaßte Druck mittels eines Wandlers vorzugsweise in ein elektrisches Signal umgewandelt, das mittels einer Anzeige- und/oder Aufzeichnungseinrichtung leicht angezeigt und/oder aufgezeichnet werden kann.

## Patentansprüche

1. Vorrichtung zum Prüfen von Schweißverbindungen aus thermoplastischen Kunststoff im Zug- und Biegeversuch mit einer Aufnahme zum Festlegen des Prüflings,
dadurch gekennzeichnet,
daß sie zwei Zylinder-Kolben-Einheiten aus Zylinder (13,14) und Kolbenstange (10.1, 10.2) aufweist,
daß die beiden Zylinder (13,14) mittels eines feststehenden Aufnahmejoches (12) miteinander verbunden sind,
daß die freien Enden der Kolbenstangen (10.1, 10.2) ein verstellbares Aufnahmejoch (15) tragen,
daß beim Zugversuch in die beiden Aufnahmejoche (12,15) Spannvorrichtungen zum axialen Festlegen eines Prüflinges aus stumpfverschweißten Kunststoff-Rohrabschnitten oder eines Streifens davon eingesetzt oder einsetzbar sind und
daß beim Biegeversuch in das eine Aufnahmejoch (z.B. 12) ein bügelartiges Widerlager (40) einsetzbar ist, das den Prüfling zu beiden Seiten der Schweißverbindung abstützt, während in das andere Aufnahmejoch (z.B.15) ein auf die Schweißverbindung gerichteter Biegedorn (30) einsetzbar ist.

2. Vorrichtung nach Anspruch 1,
dadurch gekennzeichnet,
daß in die beiden Aufnahmejoche (12,15) Spannhalbschalen (20) eingesetzt sind, deren Aufnahmen (24) auf den maximalen Außendurchmesser des Prüflings aus stumpfverschweißten Kunststoff-Rohrabschnitten ausgelegt sind,
daß zu beiden Seiten der Aufnahme (24) Gewindebolzen (18,19) angebracht sind, und
daß auf die Gewindebolzen (18,19) eine Spannplatte (60) aufsetzbar und aufschraubbar ist, die eine auf denselben Durchmesser abgestimmte Spannhalbschale (63) trägt.

3. Vorrichtung nach Anspruch 2,
dadurch gekennzeichnet,
daß in die Spannhalbschalen (20,63) der Aufnahmejoch (12,15) und der Spannplatten (60) Reduzierhalbschalen einsetzbar sind, die auf kleinere Durchmesser des Prüflings aus stumpfverschweißten Kunststoff-Rohrabschnitten ausgelegt sind.

4. Vorrichtung nach Anspruch 1,
dadurch gekennzeichnet,
daß in die Aufnahmejoche (12,15) Spannhalbschalen mit unterschiedlich großen, auf verschiedene Durchmesser der Prüflinge aus stumpfverschweißten Kunststoff-Rohrabschnitten abgestimmten Aufnahmen (24,64) einsetzbar sind.

5. Vorrichtung nach einem der Ansprüche 2 bis 4,
dadurch gekennzeichnet,
daß die Aufnahmen (24,64) für die Prüflinge der Spannhalbschalen (20,63) und der Reduzierhalbschalen aufgerauht, z.B. geriffelt sind.

6. Vorrichtung nach einem der Ansprüche 1 bis 5,
dadurch gekennzeichnet,
daß die Aufnahme (24,64) der Spannhalbschalen (20,63) mit Innennuten (23) versehen sind, in die Spannscheiben (50 bzw. 70) mit konvexer bzw. konkaver Spannfläche (52 bzw. 71) zum Festlegen von streifenförmigen Prüflingen einsetzbar sind, wobei die konvexe und die konkave Spannfläche (52,71) an die Krümmung der Innen- und Außenwandung des Prüflings angepaßt sind.

7. Vorrichtung nach einem der Ansprüche 1 bis 6,
dadurch gekennzeichnet,
daß das bügelartige Widerlager (40) und der Biegedorn (30) stirnseitig an Befestigungszylindern (31,41) befestigt sind, die einen umlaufenden Steg (32,42) aufweisen und in die mit Innennut (23) versehenen Aufnahmen (24,64) der Spannhalbschalen (20,63) axial unverschiebbar einsetzbar sind.

8. Vorrichtung nach einem der Ansprüche 1 bis 7,
dadurch gekennzeichnet,
daß der Biegedorn (30) und das bügelartige Widerlager (40) in Abstützkugelelemente (34,44,45) auslaufen.

9. Vorrichtung nach einem der Ansprüche 1 bis 8,
dadurch gekennzeichnet,
daß die Zylinder-Kolben-Einheiten hydraulisch oder pneumatisch betätigbar sind.

10. Vorrichtung nach einem der Ansprüche 1 bis 9,
dadurch gekennzeichnet,
daß die Zylinder (13,14) der Zylinder-Kolben-Einheiten mit einer Basisplatte (11) verbunden und von dieser getragen sind.

11. Vorrichtung nach einem der Ansprüche 1 bis 10,
dadurch gekennzeichnet,
daß Widerlager mit unterschiedlichem Abstand der Abstützkugelelemente vorgesehen sind.

12. Vorrichtung nach einem der Ansprüche 1 bis 11,
dadurch gekennzeichnet,
daß mittels einer Meßeinrichtung der von den Kolben-Zylinder-Einheiten aufgebrachte Druck erfaßbar ist und
daß mittels eines Wandlers der erfaßte Druck in ein elektrisches Signal umwandelbar und mittels einer Anzeige- und/oder Aufzeichnungseinrichtung anzeig- und/oder aufzeichenbar ist.
